# EUROPEAN PATENT APPLICATION

(11) **EP 4 331 705 A1**
(43) Date of publication of application: **06.03.2024**
(21) Application number: 22211961.2
(22) Date of filing: 07.12.2022
(51) Int. Cl.: B01D 46/10, F24C 15/20

(54) **FILTER ELEMENT OR ASSEMBLY, FUME EXTRACTION UNIT AND COMBINATION APPLIANCE**

(30) Priority: 30.08.2022 EP 22192798
(71) Applicant: ELECTROLUX APPLIANCES AKTIEBOLAG, 105 45 Stockholm (SE)
(72) Inventor: LEYH, Björn, 91541 Rothenburg ob der Tauber (DE); PUOTI, Eduardo, 91541 Rothenburg ob der Tauber (DE); LEO, Orlando, 47122 Forli (IT)
(74) Representative: Electrolux Group Patents

(57) **Abstract**

The present invention is related to a filter element (52', 56) or assembly (52) for a fume extraction unit (14). The filter element (52', 56) or assembly (52) is configured and/or designed for being arranged in or allocated to an air duct (44), in particular an air duct (44) of the fume extraction unit (14). According to the invention, the filter element (52', 56) or assembly (52) comprises a handling means (80) for a handling of the filter element (52', 56) or assembly (52), particularly for a displacement of the filter element (52', 56) or assembly (52).

Further disclosed are a fume extraction unit (14) comprising such a filter element (52', 56) or assembly (52), as well as a combination appliance (10) comprising a cooking hob (12) and an extraction device (14).

## Description

The present invention relates to a filter assembly, in particular a filter assembly for an extraction device, according to the preamble of claim 1. The present invention relates further to a fume extraction unit according to claim 12 and to a combination appliance comprising a cooking hob and an extraction device according to claim 13.

In order to support persons in performing domestic work, household appliances of different kinds are known. In particular, cooking processes are performed using cooking appliances. For example, cooking hobs comprise cooking zones for placement of cookware receiving the food to be cooked. The cooking zones are generally arranged on a cooktop, in particular a glass ceramic cooktop, which forms an upper wall of the cooking hob. During cooking processes under use of such cooking hobs, cooking fumes are generated, which are distributed over the cooking area. In order to avoid these cooking fumes to be spread throughout the entire kitchen space, it is common to arrange an extraction hood above the cooking area for an aspiration of these fumes. Moreover, there are also cooking hobs known, in which a cooking fumes extraction functionality is integrated. More specifically, such kind of a combination appliance comprises a cooking hob and an integrated downdraft extraction device with an extraction opening in the cooktop of the cooking hob. With this combination of a cooking hob and an extraction device, a compact solution is provided. Extraction hood or extraction device can be operated in parallel to the cooking hob, thereby sucking in those cooking fumes in order to filter out particles and tiny droplets and/or to blow the cooking fumes to the outside of the building.

Especially in a kitchen arrangement, in which the cooking area is positioned distant from an outer wall, the extraction hood or the combination appliance with a downdraft extraction device usually operates with recirculating air, which is blown out into a kitchen cabinet or directly into the ambient air after it has been filtered. To this end, it is known to arrange an odour filter element in addition to a grease filter element in an air duct of the extraction hood or the extraction device.

The international patent application WO 2022/028724 A1 discloses a combination appliance with a filter unit including a filter carrier, which supports a filter assembly with grease particles separating and odour removing properties. The filter carrier is positioned in an air channel downstream of a suction opening for cooking fumes aspiration, which also allows access to the filter carrier by the user through said opening for a removal of the filter assembly, in particular for maintenance activities. If the user of the combination appliance chooses a long maintenance interval, the filter assembly can have become very slippery due to the extended amount of grease particles adhering thereon and the handling of the filter assembly during the maintenance activities usually ends up with soiled fingers.

It is an object of the present invention to provide a filter element or assembly ensuring a secure handling of the filter element or assembly, particularly by reducing the user's contact surface with a grease-covered filter element or assembly. Moreover, a fume extraction unit with such a filter element or assembly as well as a combination appliance comprising a cooking hob and an extraction device with such a filter element or assembly shall be provided, which are designed in a way allowing an easy access to and a secure handling including a correct re-assembly of the filter element or assembly during maintenance activities.

The object is achieved for a filter element or assembly according to the preamble of claim 1 by the features of the characterizing part of claim 1.

According to a first aspect of the present invention, a filter element or assembly for a fume extraction unit is provided, which filter element or assembly is configured and/or designed for being arranged in or allocated to an air duct, in particular an air duct of the fume extraction unit. According to the present invention, the filter element or assembly comprises a handling means for a handling of the filter element or assembly. This handling may include an operation, specifically a manual operation, providing a displacement of the filter element or assembly.

The fume extraction unit may be assigned to or included in a cooking hood or in an extraction device of a combination appliance, which further comprises a cooking hob. The filter element or assembly particularly comprises grease filtering properties, but it may also be adapted for a filtering of other substances or compounds of specifically cooking fumes, such as odours, vapours or volatile organic compounds. Moreover, the filter element or assembly may be arranged or arrangeable in a fixed filter holder, but preferably it is supported by a filter carrier, which advantageously is removable from its operative position, particularly from the fume extraction unit.

The handling means may be specified by an arbitrary design that is configured for being handled, specifically by an operator, e.g. a user of the fume extraction unit, but it is favourably developed by including or being formed as a gripping element. The handling means is preferably arranged at and/or connected with a frame of the filter element or with a frame of at least one filter element of the filter assembly. Additionally, or alternatively, the handling means may preferably be arranged at and/or connected with a filter surface of the filter element or with a filter surface of at least one filter element of the filter assembly. I. e., the handling means may comprise attachment or connection means, which interact or engage with respective means of at least one of the frame and the filter surface of the filter element or the at least one filter element of the filter assembly. The handling means can particularly bring full benefits, i.e. reducing the user's contact surface with a grease-covered area, with such arrangement at and/or connection with the filter surface, which is usually the most polluted area or section of the filter element or filter assembly. In particular, said filter surface is a panel filter and/or designed as a mesh filter element, preferably a metal mesh filter element.

Moreover, the filter element or at least one filter element of the filter assembly, in particular the filter surface of the filter element or of the at least one filter element of the filter assembly, may be of a flat shape, in particular with a rectangular structuring.

In order to easily perform maintenance work on the filter element or assembly, e. g. a favourably regular cleansing, the filter element or assembly is preferably configured to be removably arranged at the filter holder for being removed therefrom. According to a particularly preferred solution, the filter element or assembly is removable from the filter carrier, which itself is removable from its operative position. Any of these maintenance activities may be performed by a manual action on the handling means.

One particular advantage of the handling means of the present invention may be receivable in that a removal of the filter element or assembly from and/or an insertion, particularly a reinsertion, of the filter element or assembly in the filter holder, in particular the filter carrier, without a detachment of the filter holder, in particular the filter carrier, from the fume extraction unit is performable. Therefore, the filter element or assembly is preferably configured to be removed from and/or included in the filter holder, in particular the filter carrier, without a detachment of the filter holder, in particular the filter carrier, from the fume extraction unit. Additionally, or alternatively, the handling means is preferably attached at the filter element or assembly in a way that a removal from and/or inclusion in the filter holder, in particular the filter carrier, is executable without a detachment of the filter holder, in particular the filter carrier, from the fume extraction unit. The handling means may favourably be arranged in a way allowing the gripping and handling of the entire filter element or assembly, which e. g. would not be possible for the user of the fume extraction unit without provision of the handling element.

Advantageously, the filter element or assembly is configured to be handled by a pivoting movement and/or by a translational movement, which may include a lifting and/or lowering movement. The purpose of said pivoting movement and/or translational movement is particularly a displacement of the filter element or assembly.

According to embodiments, the handling means comprises at least one of a handle knob, a lifting lug, a handhold, a handlebar, and a finger-hole or handle sleeve. The handle sleeve is preferably designed similar to a blind hole, in order to avoid a portion of the airstream to bypass the filter surface. That way, further measures in the case of using a through hole are avoided.

In some implementations, the filter element or assembly comprises at least a first handling means and a second handling means. In that case, the first and second handling means are arranged at the filter element or assembly at a distance from one another, what is favourable for a secure handling.

One preferred solution is provided with an extendable handling means. In particular, the handling means is telescopically extractable and retractable. Said extraction and/or retraction functionality is preferably supported by a push-push mechanism and/or a spring element, which may act on the handling means, specifically on a protruding end section of the handling means. Additionally, or alternatively, the handling means may be insertable in a frame part of the filter element or assembly by a longitudinal displacement, which may also be supported by a push-push mechanism and/or a spring element.

In order to provide an increased flow-around characteristic for the handling means, the handling means may be shaped with a streamlined design. In addition, or at least as an alternative, the handling means may comprise a smooth surface structure. With anyone, or with both, of these measures, a grease deposit on the handling means, which is flowed round by the airstream with fumes, can be avoided or minimized.

Another preferred solution is characterized in that the handling means is configured to be pivoted. Advantageously, this characteristic is provided by a pivoting motion executable towards a position, in which the surface, which is subject to the airflow inside of the cooking hood or the extraction device, is reduced, preferably minimized. Such a structuring minimizes the handling means surface, which is exposed to the airstream. This minimized surface avoids air turbulences, which may result in flow noises.

The pivoting mechanism may be provided in such a way that the handling means, which is particularly bar-shaped or designed as a flat material element, abuts the filter surface in a non-active position. "Non-active position" in that sense means the handling means is folded and provides no, or only a poor, gripping opportunity. On the other hand, a pivoting back of the handling means, i. e. from its non-active position to its active position, is preferably supported by a spring-loaded means. Moreover, in particular when said spring-loaded means is implemented, in order to keep the handling means in its pivoted, i. e. non-active, position, a latching means may be provided. A more specific embodiment provides for the previously mentioned first and second handling means being designed in said pivotable structure. In some more advanced embodiments, the first and second handling means, which particularly are bar-shaped or designed as flat material elements, touch or abut frame parts and/or filter surface areas of the filter element or assembly in their non-active position. In particular, in this non-active position the handling means are arranged flush with the filter frame parts and/or with filter surface areas.

According to embodiments, the handling means is detachably connected to the filter element or assembly. A detached handling means may be favourable for an enhanced cleansing activity. The handling means is particularly detachable by a tool-free disassembly, which further facilitates the maintenance. For example, a bayonet coupling or a threaded coupling may be provided for the detachment, and for a later re-attachment, of the handling means. More specifically, for said attachment and/or detachment operation, the handling means may be used as an operating handle, e. g. as a screw handle.

One preferred embodiment of the filter assembly according to the present invention comprises at least a first filter element and a second filter element. This specific filter assembly is characterized by a second filter element, which is displaceable against the first filter element by acting on the handling means. To this end, the handling means is preferably arranged at or allocated to the second filter element. If the previously mentioned pivoting mechanism is included in this specific filter assembly, it may be provided in such a way that the handling means, which is particularly bar-shaped or designed as a flat material element, abuts the filter surface of the second filter element in a non-active position.

Said at least first and second filter elements may be arranged in parallel and connected to one another. Moreover, the handling means may be dividable into at least two parts. In such an implementation, the handling means are particularly dividable in the middle, so that the first segment is connected to the first filter element and the second segment is connected to the second filter element.

The filter element or at least one filter of the filter assembly may be included in or supported by a filter carrier. The filter element or assembly may be arranged vertically or horizontally in the filter carrier. One specific embodiment is characterized by an inclined filter arrangement, preferably at least one flat filter element is arranged in the filter carrier in an inclined orientation.

The object is further achieved for a fume extraction unit by the combination of features of claim 12.

According to a second aspect of the present invention, a fume extraction unit, which comprises a filter element or assembly as herein disclosed, particularly as previously described in general and by embodiments, is provided. In particular, the fume extraction unit further comprises a filter carrier for the arrangement of the filter element or the filter assembly in the fume extraction device. The filter element or assembly and/or the filter carrier is/are preferably removable, specifically removable from an operative position inside of the fume extraction device. More specifically, the filter element or assembly and/or the filter carrier may be arranged in, and may be removable from, an air duct of the fume extraction device.

The object is also achieved for a combination appliance, which comprises a cooking hob and an extraction device, by the combination of features of claim 13.

According to a third aspect of the present invention, a combination appliance with a cooking hob and an extraction device is provided. The cooking hob comprises a cover plate or worktop, which has an opening or a recess formed therein. The cover plate or worktop is in particular a glass plate. The extraction device is arranged below the cooking hob, in particular below the cover plate or worktop of the cooking hob. Moreover, the extraction device preferably is or comprises the fume extraction unit as disclosed herein, in particular as previously described in general and by embodiments. The extraction device comprises a fan, a filter element or assembly and an outlet opening for exhaust air, which may be exhausted into the ambient air. The fan is provided for sucking air from the area above the cooking hob through the opening or recess of the cover plate or worktop and conveying it through an air duct of the extraction device to the outlet opening. Further, the filter element or assembly is designed as herein disclosed, in particular as previously described in general and by embodiments of the filter element or assembly. The filter assembly is preferably arranged or arrangeable upstream of the fan and downstream of the opening or recess.

By means of the filter element or assembly used in said fume extraction unit as well as in said combination appliance, which filter element or assembly comprises a handling means for a handling of the filter element or assembly, a secure handling of a grease-covered component is enabled. Moreover, due to the manual operation on the filter element or assembly using its handling means an indication for a correct positioning during the re-assembly in the fume extraction unit or in the combination appliance is given to the user oriented on the position of the handling means at the filter element or assembly.

The cooking hob may be of any type including electric or gas cooking hobs. In particular, an induction cooking hob is a part of the combination appliance. The cooking hob may further be an autarkic cooking appliance, particularly integrated in a countertop of kitchen furniture, or it may be part of a stove.

A top surface of the cover plate or worktop, which is accessible to a user of the combination appliance, may be used for putting cookware thereon, specifically in order to perform a cooking process. To this end, the cooking hob preferably comprises at least one heating element defining a cooking zone on the cover plate or worktop. The cover plate or worktop may be of any suitable design or material, but favourably it is made out of glass, notably of glass ceramics.

A particularly preferred combination appliance is characterized in that it comprises a filter assembly with at least a first filter element and a second filter element. These first and second filter elements preferably comprise at least one particle filter, in particular a grease particle filter, for removing particles from the air sucked in, and/or at least one odour filter, preferably a carbon filter, for removing odours from the air sucked in. The particle filter and/or the filter carrier may comprise support means or connection and/or engagement means acting on or interacting with the odour filter in order to provide a filter assembly with connected first and second filter elements, which provides for a simplified handling of the filter assembly. Moreover, the odour filter may be supported by the particle filter and/or by the filter carrier. The odour filter, which may be a carbon-based filtering means, is adapted to remove odours from the air sucked in and may be mounted or arranged unconnected to the particle filter and/or filter carrier. Preferably, however, the odour filter is coupled with the particle filter and/or with the filter carrier.

A preferred embodiment of the combination appliance according to the third aspect of the present invention is characterized in that the filter element or assembly is removably arranged in the air duct of the extraction device of the combination appliance. The filter element or assembly is preferably removable through the opening or recess, particularly by acting on the handling means, e. g. by performing a manual operation using the gripping element.

According to specific embodiments of the present invention, the filter element or at least one filter element of the filter assembly, in particular at least the particle filter, is included in or supported by a filter carrier of the combination appliance. The filter carrier is preferably removably arranged in the air duct of the extraction device. Moreover, the filter carrier is preferably removable through the opening or recess, particularly by acting on the handling means, e. g. by performing a manual operation using the gripping element.

Novel and inventive features of the present invention are set forth in the appended claims.

The present invention will be described in further detail with reference to the drawings, in which
- Fig. 1: is a perspective view of a combination appliance comprising a cooking hob and a downdraft extraction device installed in a kitchen cabinet;
- Fig. 2: is a cross-sectional perspective view of the disassembled combination appliance of Fig. 1 with a frontal surface cut away;
- Fig. 3: is a rear view of the combination appliance of Fig. 2;
- Fig. 4: is a schematic front view of the combination appliance of Fig. 2, but with a first embodiment of a filter assembly;
- Fig. 5: is the filter carrier of the combination appliance of Fig. 2 in isolated illustration removed from the appliance including a second embodiment of a filter assembly;
- Fig. 6: is an exploded perspective view of the filter assembly of the second embodiment according to Fig. 5;
- Fig. 7: illustrates a grease filter element of the filter assembly according to Fig. 6, but with a rear view of this filter element compared to Fig. 6;
- Fig. 8: is a side view of the grease filter element according to Fig. 7;
- Fig. 9: is a top view of the grease filter element according to Fig. 7; and
- Fig. 10: illustrates a cross-sectional detail view of the filter assembly according to Fig. 7 along the line X - X.

In all figures the same or equivalent part are marked with the same reference numbers.

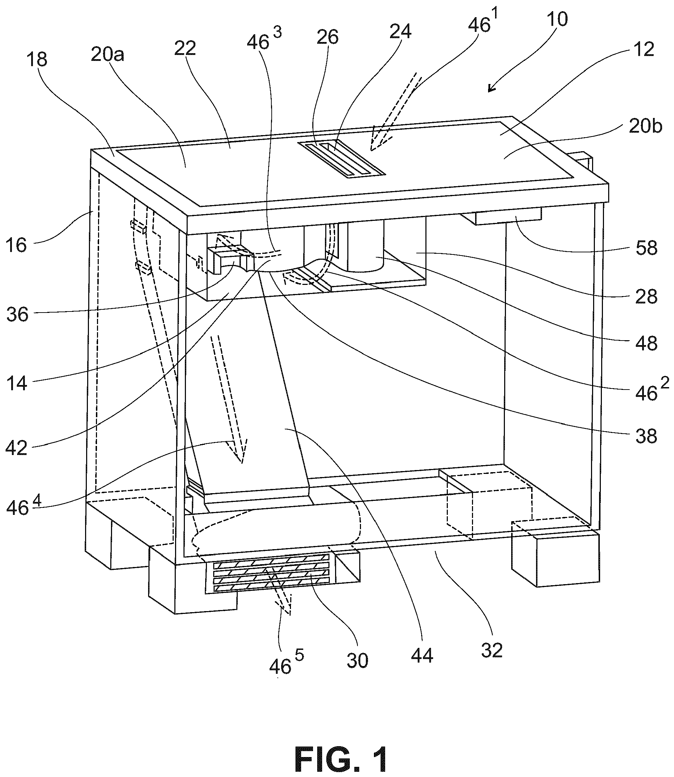

Fig. 1 illustrates a combination appliance 10 comprising a cooking hob 12 and a downdraft extraction device 14 installed in a kitchen cabinet 16. The cooking hob 12 is implemented in a cutout of a kitchen countertop 18 forming a top cover plate of the kitchen cabinet 16. The downdraft extraction device 14 is configured to take away cooking vapours occurring during cooking processes, in particular when cooking with uncovered cookware. The cooking hob 12 comprises cooking regions 20a, 20b arranged on a left half and a right half of a worktop 22 of the cooking hob 12, which left and right halves are separated from each other by a suction opening 24 for an intake of the cooking vapours, the suction opening 24 being arranged alongside a worktop centreline. The suction opening 24 is covered by a cover grid 26 for preventing items, e.g. cookware, to fall into the suction opening 24. Instead of the cover grid 26 a lid may be used for entirely covering the suction opening when the extraction device 14 is out of use, but for the operation of the extraction device 14 the lid is pivotable into an upright open position.

A casing 28 of the extraction device 14 is shown in Fig. 1 in transparent illustration. Said casing 28 provides a closed outer shell or first channel for a flow of the sucked-in cooking vapours on their way from the suction opening 24 to an exhaust opening 30 in a base area 32 of the kitchen cabinet 16. Said exhaust opening 30 is also covered, namely by an outlet grille 34.

The flow of the sucked-in cooking vapours through the extraction device 14 is driven by the operation of an extraction fan 36 arranged inside of the casing 28. Said extraction fan 36 comprises a bottom-sided intake opening 38 for sucking the cooking vapours from the interior space of the casing 28.

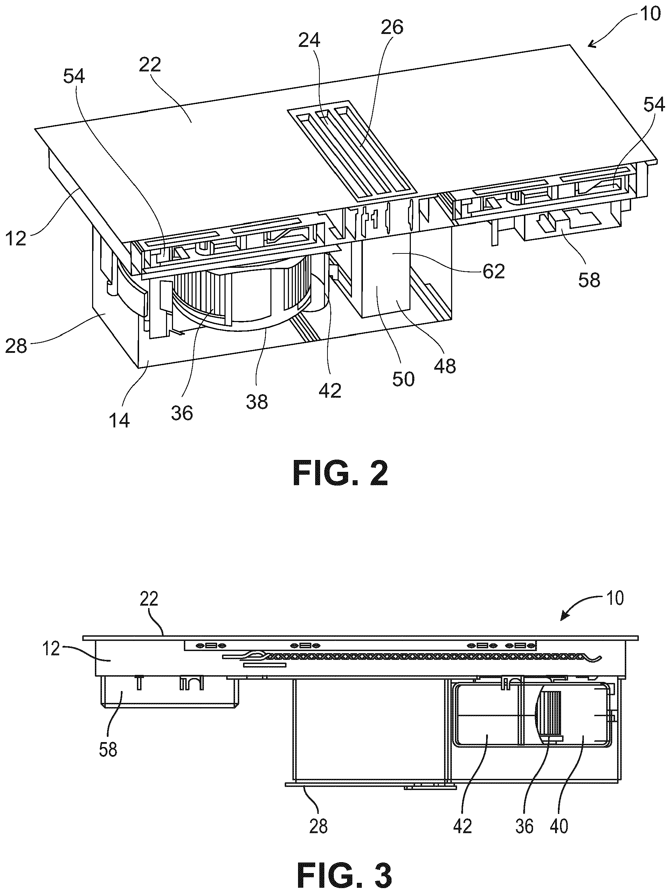

As illustrated by Fig. 3, which is a rear view of the combination appliance 10, a rear-sided fan outlet 40 is arranged for a horizontal exit of the air blown out backwards from the extraction fan housing 42. The fan outlet 40 is connected to a first end of an air duct 44 designed as a rectangular tube and forms a second channel arranged downstream the above-mentioned first channel. Directly at the passage from the fan outlet 40 to the air duct 44, an air duct bending by 90 degrees is implemented, which redirects the air flow from horizontal to vertical downwards. The air duct 44 may be guided alongside a rear side of the kitchen cabinet 16 and may be bent again by 90 degrees close to a rear lower edge of the kitchen cabinet 16 in order to direct the airflow towards exhaust opening 30 in the base area 32 of the kitchen cabinet 16. Accordingly, the second end of the air duct 44 is connected to the exhaust opening 30. The embodiment illustrated in Fig. 1 shows a solution of the air duct 44 with an inclined section of its downwardly directed portion, directed slightly to the right. Naturally, a solution with said portion arranged in an exact vertical direction is considerable as well.

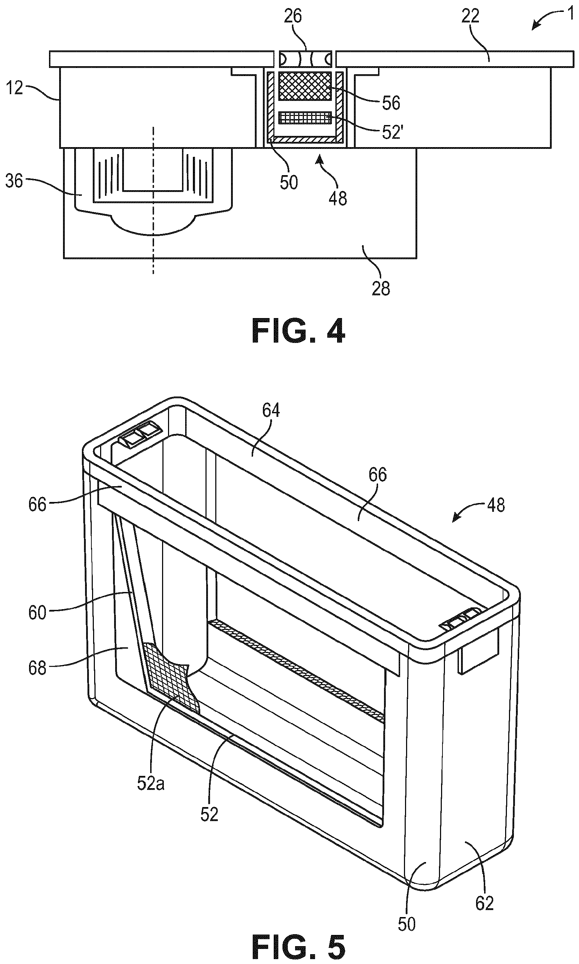

The course of the cooking vapours from the cooking area through the extraction device 14 to a re-entry into ambient air is illustrated in Fig. 1 by dotted arrows 46¹ to 46⁵. On their way through the extraction device 14, the cooking vapours pass through a filter arrangement 48, which is arranged downstream directly behind the suction opening 24. Said filter arrangement 48, which will be described in more detail further down below with reference to Fig. 5, includes a filter carrier 50 for providing a purification of the conveyed air.

The cross-sectional view of Fig. 2 further shows two power boards 54, one for the left cooking region 20a and one for the right cooking region 20b, the power boards 54 providing cooking zones in the left and right cooking regions 20a, 20b with electrical power. In the present embodiment, the cooking hob 12 is an induction cooking hob and the cooking zones are defined by induction coils (not shown) that are arranged below the worktop 22 of the cooking hob 12. Attached to the bottom side of the power board 54 assigned to the right cooking region 20b, a further circuit board is arranged forming a control electronics 58 for the combination appliance 10.

Fig. 4 illustrates schematically a front view of a combination appliance 10 having a structure similar to that one of Figs. 1 to 3. The extraction fan 36 and the filter carrier 50 are presented in a cross-sectional illustration. The filter arrangement 48 of Fig. 4 presents a first embodiment of the filter assembly 52 according to the present invention. Within the filter carrier 50 a grease filter 52' is positioned in a horizontal orientation, so that the aspirated cooking vapours pass through the grease filter 52' in a direction orthogonally to the filter surface. On top of the grease filter 52' a carbon filter 56 for filtering out odours from the cooking vapours is arranged also in horizontal orientation. The carbon filter 56 may be supported by the grease filter 52', which itself is releasably fixed to the filter carrier, without any particular fixation. Naturally, the carbon filter 56 may also be fixed to the filter carrier 50 in a releasable manner, too, and may be spaced from the grease filter 52', as indicated in the schematic illustration.

A second embodiment of the inventive filter assembly 52 is presented by the filter arrangement 48 according to Fig. 5, showing the filter arrangement 48 of Fig. 1 being removed from the suction opening 24 and shown in an isolated illustration. In order to remove the filter arrangement 48, the cover grid 26 has to be removed prior to the removal of the filter arrangement 48. However, according to a modification, the cover grid 26 and the filter arrangement 48 may be coupled together, so that the filter arrangement 48 may be removed together with the cover grid 26 in a single movement.

According to Fig. 5, the rectangular filter assembly 52, formed by an assembly of a grease filter element 52' and a carbon filter element 56 arranged in parallel (as will be described and illustrated more in detail further down below), is positioned in and supported by the filter carrier 50. The filter carrier 50 includes a carrier housing 62 and a carrier frame 64, which are separable from each other. In an assembled state, the carrier frame 64 forms an upper face of the filter carrier 50 and, in that, covers the upper side of the carrier housing 62. The filter assembly 52 is detachably coupled to one of the longer frame parts 66 of the rectangular carrier frame 64, but removable from the carrier housing 62 when coupled with the carrier frame 64. The filter assembly 52 has a circumferential frame 60 surrounding a filter surface, which is symbolically indicated in Fig. 5 with a partial surface area by 52a. The symbolic filter surface 52a provides a purification of the conveyed air. The rectangular filter assembly 52 is arranged in the filter carrier 50 in an inclined orientation, which is favourable with respect to the airflow making a turn from a topside intake to a horizontal outlet.

As shown in Fig. 1 by dotted arrows 46¹ and 46², the flow of cooking vapours is conducted from the suction opening 24 and the open top side of the filter arrangement 48 through the symbolic filter surface 52a before leaving the filter arrangement 48 by penetrating the lateral surface 68 facing the fan 36. In order to provide an extensive passage for the airflow on its way out from the carrier housing 62, the lateral surface 68 is open to a great extent, which results in remaining merely a frame section of the lateral surface 68.

As already indicated before, not only the entire filter arrangement 48 is removable from the suction opening 24, but also the filter assembly 52 is removable from the carrier housing 62, specifically for cleaning and/or replacing purposes.

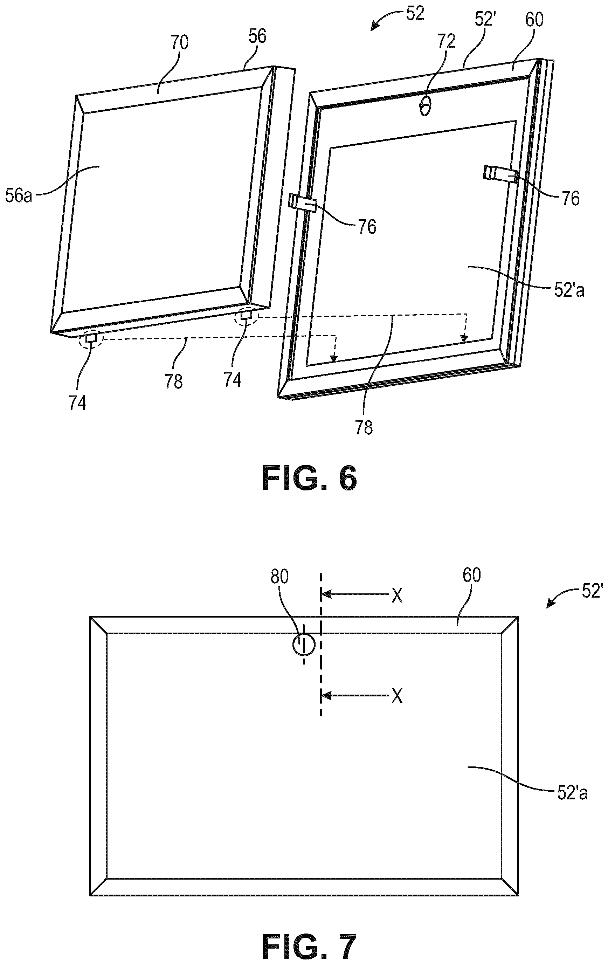

Fig. 6 shows in an exploded perspective view the two components of the second embodiment of the filter assembly 52 separated from each other, what may represent the situation before coupling them to the filter assembly 52. In the same way as with the first embodiment, these two components according to the second embodiment are constituted by a grease filter element 52' and a carbon filter element 56. The rectangular grease filter element 52' is presented in Fig. 6 on the right side and includes a rectangular grease filter surface 52'a, which is framed likewise by a rectangular (in a front view) grease filter frame 60. As not shown, the grease filter frame 60 is U-shaped in cross-section, in that enclosing the four lateral edges of the grease filter surface 52'a. The second component of the filter assembly 52, namely the carbon filter element 56, is shown in Fig. 6 on the left side. Like the grease filter element 52', the carbon filter element 56 is rectangular, too. Moreover, the carbon filter element 56 is structured in general similar to the grease filter element 52', including a rectangular carbon filter surface 56a and a rectangular carbon filter frame 70, which, in the same way as the grease filter frame 60, is U-shaped in cross-section for enclosing the four lateral edges of the carbon filter surface 56a. Both grease filter frame 60 and carbon filter frame 70 may be made of metal, in particular of stainless steel.

The carbon filter element 56 is configured to be connected to the grease filter element 52' by coupling means. First components of these coupling means are provided by two lugs 74, which the carbon filter frame 70 comprises on its bottom frame part and which are arranged at a distance from each other. Further, the lateral sides of the carbon filter frame 70 are retained by clamping force generated by two spring-loaded hooks 76, arranged at the lateral parts on the left and right side of the grease filter frame 60. These two spring-loaded hooks 76 not only care for a secure contact of the carbon filter frame 70 with the grease filter surface 52'a, but also prevent any lateral displacement of the carbon filter element 56.

Fig. 6 also indicates by dotted arrows 78 the first step of the assembling process of the filter assembly 52 according to the second embodiment. After alignment of the carbon filter element 56 by having an acute angle facing the grease filter element 52', the two lugs 74 at the bottom side of the carbon filter frame 70 are inserted in the U-shaped bottom part of the grease filter frame 60, in fact, behind the front arm (according to the alignment in Fig. 6 of the grease filter element 52') of the U-shaped grease filter frame 60, so that the two filter elements 52', 56 form a "V". Thereafter, the carbon filter element 56 is pivoted towards the grease filter surface 52'a until the carbon filter frame 70 makes contact with the grease filter surface 52'a. During this motion, the lateral sides of the carbon filter frame 70 are captured by the two spring-loaded hooks 76, and at the end of this motion, said lateral sides have snapped in and the carbon filter frame 70 is clamped between the hooks 76.

The exploded view of Fig. 6 also demonstrates that the carbon filter element 56 differs from the grease filter element 52' in a smaller dimensioning, both in height and width. Moreover, it is made clear that the grease filter frame 60 forms also the frame of the entire filter assembly 52, as it is adumbrated in Fig. 5, specifically for bracing the filter assembly 52 against and/or detachably coupling to one of the longer frame parts 66 of the rectangular carrier frame 64. The comparison between Figs. 5 and 6 also imply that the symbolic filter surface 52a, as explained with the description to Fig. 5 above, is in reality a connection in series of two filter surfaces, namely of grease filter surface 52'a and carbon filter surface 56a.

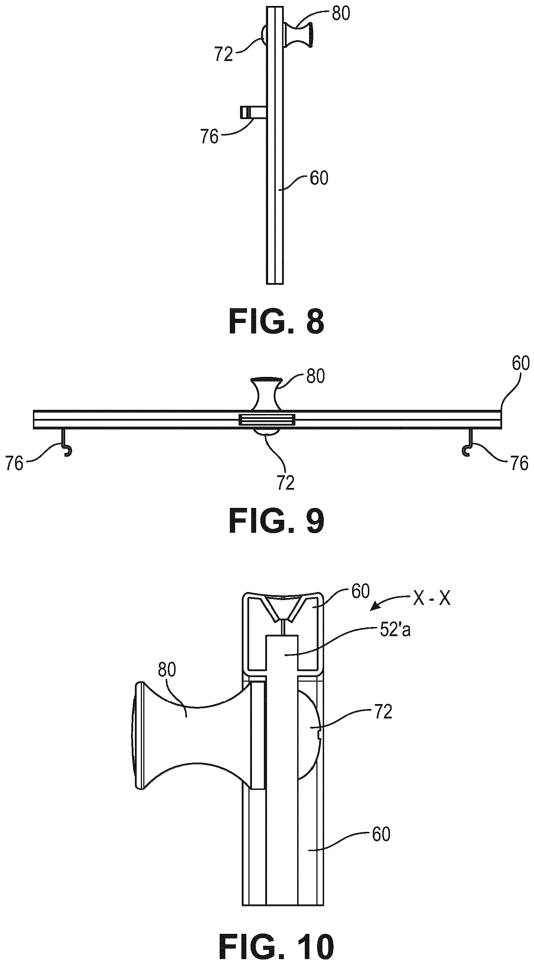

Fig. 7 shows the grease filter element 52' of the filter assembly 52 according to Fig. 6 in an individual depiction, but with a rear view of this filter element 52' in comparison to Fig. 6. This illustration provides a visual access to the upstream filter surface of the grease filter surface 52'a, which may be a mesh filter element. This upstream filter surface is usually the most grease-covered area of the entire filter element at the moment of starting maintenance activities, e. g. when the filter assembly 52 is in a condition for cleansing. This means that the user of the combination appliance 10 may need to approach the filter assembly 52 by touching this grease-covered surface. In order to reduce or to entirely avoid the contact of the user's hands with the greasy surface, more specifically with the greasy filter surface 52'a, a gripping element 80 is fixed to the grease filter element 52', with which not only a manual operation on solely the grease filter element 52', in particular a displacement thereof, is possible, but, due the mechanical coupling with the carbon filter element 56, a handling of the entire filter assembly 52 is enabled. Even though the gripping element, for which in the illustrated embodiment a knob 80 is selected, may be also covered with some grease particles because its arrangement at the grease filter element 52', notably at the filter surface 52'a of the grease filter element 52', at its upstream side, the level of pollution of the user's hand is reduced significantly. As can be seen in the side view (Fig. 8) and in the top view (Fig. 9) of the grease filter element of Fig. 7, the knob 80 is at least approximately positioned on the vertical central axis of the grease filter element 52' close to the upper frame part, which positioning allows a simplified and secured handling of the filter assembly 52 by handling it with the help of the knob 80 positioned in such a manner.

With Fig. 10 a cross-sectional illustration of the knob 80 and its fixation at the grease filter element 52' is shown in a detail view. A possible solution for the fixation of the gripping element could be provided by attaching it to the upper part of the frame 60. However, according to the solution presented in Figs. 7 to 10, the gripping element, i. e. the knob 80, is fixed at the grease filter surface 52'a in mesh filter designing. As a fixing element, a screw is chosen, illustrated in Fig. 10 only by its screw head 72, whereas the corresponding screw thread (not shown) penetrates the grease filter surface 52'a and is screwed in a screw hole (not shown) of the knob 80.

Instead of the design illustrated in Fig. 10, the gripping element can be of any shape, e. g. a cylindrical or a conical knob 80 or a flat sheet handle. It may be also an integrated unit like a recess in the surface or formed as a hole in the grease filter surface 52'a. Moreover, the preferred solution with a knob 80 may also use a rivet fixing of the knob 80 instead of an application of a screw. Another preferred solution is characterized by a positioning of the fixation element in a blind area of the grease filter surface 52'a, with the consequence of a minimization of grease-coverage during the operation of the filter assembly 52. A particularly preferred structuring of the knob 80 itself provides for a smallest possible shape, which not only reduces the visual perception of this element by the user of the combination appliance 10, but also minimizes the touch surface and the related level of pollution. More specifically, the extent of the protrusion of the knob 80, i. e. the height of the knob 80, from the grease filter surface 52'a may be selected to be in the range of the thickness of the grease filter surface 52'a. The knob 80 may also be provided with a specific gripping surface in order to increase the capture intensity. Further, the knob 80 is preferably coloured like the filter element, which also reduces the visual perception of this element. Finally, the preferred knob may be manufactured in a plastic, a brass, a cast iron, a silicone, or any other suitable material. Preferably, however, it is made is of aluminium.

It is to be noted that not only the filter assembly 52 according to the second embodiment shall be configured to be equipped with the gripping element as described with reference to Figs. 5 to 10, but also at least one of the filter elements 52', 56 presented with the filter assembly 52 according to the first example illustrated by Fig. 4 may receive such a gripping element of any design.

Both above-described filter arrangements comprise washable filter elements 52', 56, e. g. washable in a dishwasher, specifically the grease filter 52'. Also the carrier housing 62 is separately washable after having been separated from both the extraction device 14, specifically from the suction opening 24, and from the filter 52 assembly arranged therein.

Although illustrative embodiments of the present invention have been described herein with reference to the accompanying drawings, it is to be understood that the present invention is not limited to these precise embodiments, and that various other changes and modifications may be affected therein by one skilled in the art without departing from the scope or spirit of the invention. All such changes and modifications are intended to be included within the scope of the invention as defined by the appended claims.

### List of reference numerals

- 10: combination appliance
- 12: cooking hob
- 14: downdraft extraction device
- 16: kitchen cabinet
- 18: kitchen countertop
- 20a,20b: cooking regions
- 22: worktop
- 24: suction opening
- 26: cover grid
- 28: casing
- 28a,28b: first and second casing parts
- 30: exhaust opening
- 32: base area
- 34: outlet grille
- 36: extraction fan
- 38: intake opening
- 40: fan outlet
- 42: fan housing
- 44: air duct
- 46¹ to 5: arrows indicating air flow
- 48: filter arrangement
- 50: filter carrier
- 52: filter assembly
- 52a: filter surface
- 52': grease filter element
- 52'a: grease filter surface
- 54: power boards
- 56: carbon filter element
- 56a: carbon filter surface
- 58: control electronics
- 60: frame, grease filter frame
- 62: carrier housing
- 64: carrier frame
- 66: longer frame part
- 68: lateral surfaces
- 70: carbon filter frame
- 74: lugs
- 72: screw head
- 76: spring-loaded hooks
- 78: dotted arrows
- 80: knob

## Claims

1. A filter element (52', 56) or assembly (52) for a fume extraction unit (14), in particular for a cooking hood or an extraction device (14) of a combination appliance (10), which further comprises a cooking hob (12), wherein the filter element (52', 56) or assembly (52)
- is configured and/or designed for being arranged in or allocated to an air duct (44), in particular an air duct (44) of the fume extraction unit (14),
- particularly comprises grease filtering properties, and
- is preferably supported by a filter carrier (50), **characterized in that**
the filter element (52', 56) or assembly (52) comprises a handling means (80), in particular including or being formed as a gripping element, for a handling of the filter element (52', 56) or assembly (52), particularly for a displacement of the filter element (52', 56) or assembly (52), the handling means (80) preferably being arranged at and/or connected with
- a frame (60, 70) and/or a filter surface (52'a) of the filter element (52', 56),
or
- a frame (60, 70) and/or a filter surface (52'a) of at least one filter element (52', 56) of the filter assembly (52) .

2. The filter element (52', 56) or assembly (52) according to claim 1, wherein the filter element (52', 56) or assembly (52) is configured to be arranged at or to be removed from a filter holder, in particular from the filter carrier (50), by a manual action on the handling means (80), wherein preferably
- the filter element (52', 56) or assembly (52) is configured to be removed from and/or included in the filter holder, in particular the filter carrier (50),
and/or
- the handling means (80) is attached at the filter element (52', 56) or assembly (52) in a way that a removal from and/or inclusion in the filter holder, in particular the filter carrier (50), is executable
without a detachment of the filter holder, in particular the filter carrier (50), from the fume extraction unit (14).

3. The filter element (52', 56) or assembly (52) according to claim 1 or 2, wherein the filter element (52', 56) or assembly (52) is configured to be handled, in particular to be displaced, by a pivoting movement and/or a translational movement, particularly a lifting and/or lowering movement.

4. The filter element (52', 56) or assembly (52) according to anyone of the preceding claims, wherein the handling means (80) comprises at least one of
- a handle knob (80),
- a lifting lug,
- a handhold,
- a handlebar,
- a finger-hole or handle sleeve, the handle sleeve preferably being designed similar to a blind hole.

5. The filter element (52', 56) or assembly (52) according to anyone of the preceding claims, wherein the filter element (52', 56) or assembly (52) comprises at least a first handling means and a second handling means, the first and second handling means being arranged at the filter element (52', 56) or assembly (52) at a distance from one another.

6. The filter element (52', 56) or assembly (52) according to anyone of the preceding claims, wherein the handling means (80) is extendable, in particular telescopically extractable and retractable, preferably supported by a push-push mechanism and/or a spring element, and/or insertable in a frame part of the filter element (52', 56) or assembly (52) by a longitudinal displacement.

7. The filter element (52', 56) or assembly (52) according to anyone of the preceding claims, wherein the handling means (80) is shaped with a streamlined design and/or comprises a smooth surface structure.

8. The filter element (52', 56) or assembly (52) according to anyone of the preceding claims, wherein the handling means (80) is configured to be pivoted, in particular in a pivoting motion towards a position, in which the surface that is subject to the airflow inside of the cooking hood or the extraction device (14), is reduced, preferably minimized.

9. The filter element (52', 56) or assembly (52) according to anyone of the preceding claims, wherein the handling means (80) is detachably connected to the filter element (52', 56) or assembly (52), the handling means in particular being detachable by a tool-free disassembly.

10. The filter assembly (52) according to anyone of the preceding claims, wherein the filter assembly (52) comprises at least a first filter element (52') and a second filter element (56), wherein the second filter element (56) is displaceable against the first filter element (52') by acting on the handling means (80), which is preferably arranged at or allocated to the second filter element (56).

11. The filter assembly (52) according to claim 10, wherein the at least a first filter element (52') and a second filter element (56) are arranged in parallel and connected to one another, and wherein the handling means are dividable into at least two parts, the handling means particularly being dividable in the middle with the first segment being connected to the first filter element (52') and the second segment being connected to the second filter element (56).

12. A fume extraction unit (14) comprising a filter element (52', 56) or assembly (52) according to any of the preceding claims, the fume extraction unit (14) particularly further comprising a, preferably removable, filter carrier (50) for the arrangement of the filter assembly (52) in the fume extraction device (14).

13. A combination appliance (10) comprising a cooking hob (12), which comprises a cover plate or worktop (22), in particular a glass plate, having an opening (24) or a recess formed therein, and an extraction device (14), which is arranged below the cooking hob (12), in particular below the cover plate or worktop (22) of the cooking hob (12), the extraction device (14) preferably being or comprising the fume extraction unit (14) according to claim 12, wherein the extraction device (14) comprises
- a fan (36) for sucking air from the area above the cooking hob (12) through the opening (24) or recess of the cover plate or worktop (22) and conveying it through an air duct (44) of the extraction device (14),
- the filter element (52', 56) or assembly (52) according to anyone of the claims 1 to 11, and
- an outlet opening (30) for exhausting air, in particular into the ambient air,
wherein the filter assembly (52) is preferably arranged or arrangeable upstream of the fan (36) and downstream of the opening (24) or recess,
and wherein the at least first (52') and second (56) filter elements preferably comprise
- at least one particle filter (52'), in particular a grease particle filter, for removing particles from the air sucked in, and/or
- at least one odour filter (56), preferably a carbon filter, for removing odours from the air sucked in.

14. The combination appliance (10) according to claim 13, wherein the filter element (52', 56) or assembly (52) is removably arranged in the air duct (44) of the extraction device (14), the filter element (52', 56) or assembly (52) preferably being removable through the opening (24) or recess, particularly by acting on the handling means (80).

15. The combination appliance (10) according to claim 13 or 14, wherein the filter element (52') or at least one filter element of the filter assembly (52), in particular at least the particle filter (52'), is included in or supported by a filter carrier (50), the filter carrier (50) preferably being removably arranged in the air duct (44) of the extraction device (14), the filter carrier (50) preferably being removable through the opening (24) or recess, particularly by acting on the handling means (80).
